(19) Europäisches Patentamt
European Patent Office
Office européen des brevets

(11) Publication number: **0 208 471 B1**

(12) **EUROPEAN PATENT SPECIFICATION**

(45) Date of publication of patent specification: **06.05.92**

(51) Int. Cl.[5]: **G11B 5/86**, G11B 5/706

(21) Application number: **86304937.5**

(22) Date of filing: **25.06.86**

(54) **Magnetic transfer methods.**

(30) Priority: **26.06.85 JP 139879/85**

(43) Date of publication of application:
**14.01.87 Bulletin 87/03**

(45) Publication of the grant of the patent:
**06.05.92 Bulletin 92/19**

(84) Designated Contracting States:
**DE FR GB NL**

(56) References cited:
**CH-A- 317 945**
**GB-A- 2 064 371**
**US-A- 3 721 775**
**US-A- 3 844 907**
**US-A- 4 414 124**

(73) Proprietor: **SONY CORPORATION**
**7-35 Kitashinagawa 6-Chome Shinagawa-ku**
**Tokyo 141(JP)**

Proprietor: **Toshiba Corporation**
**1 Komukaitoshiba-cho Saiwa-ku**
**Kawasaki-shi Kanagawa-ken(JP)**

(72) Inventor: **Nagaki, Takehiro c/o Patents Division**
**Sony Corporation 6-7-35 Kitashinagawa**
**Shinagawa-ku Tokyo 141(JP)**
Inventor: **Suzuki, Toshiyuki c/o Toshiba Corporation**
**1 Komukaitoshiba-cho Saiwai-ku**
**Kawasaki-shi Kanagawa-ken(JP)**

(74) Representative: **Thomas, Christopher Hugo et al**
**D Young & Co 10 Staple Inn**
**London WC1V 7RD(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to magnetic transfer methods, and more particularly to contact printing methods in which data previously recorded on a magnetic recording medium or master medium are magnetically transferred to another magnetic recording medium or slave medium.

For duplicating data such as records or information, for example video or audio signals, previously recorded on a magnetic recording medium onto another magnetic recording medium, there is known a contact type magnetic transfer method in which a slave medium is placed directly on a master medium on which the data have been previously recorded, such that the magnetic layers of both media are in intimate contact with each other, and a bias magnetic field is applied for transferring the data from the master medium to the slave medium. See, for example, US patent specifications US-A-3 721 775 and US-A-3 844 907.

It is required of the master medium in this case that the original data remain unaffected by the bias magnetic field; that the transferred data are a faithful replica of the original data; and that the transferred data are of high quality. Thus it is usual to make use of a magnetic recording medium of high coercive force and high magnetic flux density, such as a so-called metal tape in which the magnetic powders are ferromagnetic metal powders, as disclosed for example in Japanese laid-open patent publications 54/30002 and 56/71822.

As the slave medium used as the blank tape for copying the data from the master medium, a magnetic recording medium with high coercive force is preferred, particularly because of the tendency towards high density recording. An example of such a magnetic recording medium is one in which the magnetic powders used are needle-like particles of Co-containing gamma-$Fe_2O_3$, in which the coercive force is increased by the crystal magnetic anisotropy of the cobalt compound used as a coating, these magnetic powders being applied with field orientation in the longitudinal direction of the tape.

The above-described magnetic transfer method has a problem, in that the transfer efficiency is lowered as the wavelength of the signals to be transferred, such as video or digital audio signals, becomes shorter. Our experiments have revealed that, when the slave medium used is a magnetic recording medium in which the aforementioned Co-containing gamma-$Fe_2O_3$ is used in the longitudinally oriented state as the magnetic powder, the transfer efficiency becomes insufficient in the shorter wavelength range. As a consequence, the reproduced output, and also the resulting image or sound quality is lowered.

According to the present invention there is provided a magnetic transfer method in which a master medium and a slave medium are kept in pressure contact with each other and a bias magnetic field is applied thereacross for transferring previously recorded data on the master medium to the slave medium;
said master medium being a magnetic recording medium coated with metal magnetic powder or evaporated magnetic metal;
characterized in that:
a magnetic recording medium coated with magnetic powders of hexagonal ferrite is used as said slave medium.

References to hexagonal ferrites can be found in, for example, Swiss patent specification CH-A-317 945 and US patent specification US-A-4 414 124.

The invention will now be described by way of example with reference to the accompanying drawings, throughout which like parts are referred to by like references, and in which:

Figure 1 schematically shows an example of a magnetic transfer device;

Figure 2 is a perspective view showing the magnetic head employed in the device of Figure 1;

Figure 3 is a diagram showing the frequency characteristics of the transfer efficiency as measured for Examples of the present invention;

Figure 4 is a diagram showing the frequency characteristics of the transfer efficiency as measured for Comparative Examples; and

Figure 5 is a diagram showing the dependency of the transfer output of the slave medium according to the Examples of the present invention and the Comparative Examples on the recording wavelength and the bias ratio Hbias/Hc.

We have found that magnetic recording media making use of hexagonal ferrite as magnetic powders exhibit optimum transfer characteristics in transfer methods of the kind referred to above. On the basis of this finding, the present invention provides a magnetic transfer method in which a master medium and a slave medium are kept in pressure contact with each other and a bias magnetic field is applied thereacross for transferring data from the master medium to the slave medium, wherein the magnetic recording medium used as the slave medium is coated with magnetic powders of hexagonal ferrite, whereby the transfer efficiency is improved especially in the short wavelength range.

The hexagonal ferrite is preferably represented by the general formula MO. n ($Fe_2O_3$) where M represents at least one of Ba, Sr and Ca, and n is five or six. In order to control the coercive force, at least one of the elements Co, Ti, Ni, Mn, Cu, Zn, In, Ge and Nb may be added to replace part of the Fe of the hexagonal ferrite. For example, when replacing part of the Fe by such an additional element or elements in the Ba-ferrite system, there results a composition given by the general formula:

BaO. n $(Fe_{1-m}X_m)_2O_3$

where X represents at least one of Co, Ti, Mn, Cu, Zn, In, Ge and Nb, m is in the range O to 0.2, and n is five or six.

The hexagonal ferrite is in the form of particles of hexagonal flat plate form, the plate surface of which tends to be parallel to the surface of the magnetic medium. In addition, since the hexagonal ferrite has its easily magnetizable axis perpendicular to the plate surface, it can easily be processed into perpendicular orientation, or orientation in all directions, that is, non-orientation, by field orientation processing or mechanical field processing. In the present case, it is not the inplane oriented medium but the non-oriented medium that is preferred as the slave medium. In the non-oriented medium, the non-orientation state includes vertical magnetization components, because the hexagonal ferrite is used.

Hexagonal ferrite may be prepared by various methods, such as a flux method in which indefinite hexagonal ferrite particles are thermally sintered together with a flux at a temperature higher than the melting point of the flux; an amorphous method in which the basic component of the ferrite and a glass forming material are mixed, fused and then quickly cooled down to form an amorphous state material, which is then subjected to cause precipitation of fine particles of hexagonal ferrite; or a co-precipitation method in which a metallic ion solution constituting the hexagonal ferrite and an alkaline solution are mixed to produce a co-precipitation which is then sintered to produce fine particles of hexagonal ferrite.

The hexagonal ferrite is dissolved or dispersed together with a resin binder in an organic solvent, and the resultant solution or dispersion is coated as a magnetic coating on a base film to form a magnetic layer of the slave medium. It is noted that one may use any resin binder or organic solvents that are usually employed for this kind of magnetic recording medium. Moreover, it is possible to add a dispersing agent, a lubricant, an abrasive, an antistatic agent, a rustproof agent or the like to the magnetic layer.

The magnetic recording medium used as the master medium may be of any type, however, the master medium preferably has a coercive force which is more than twice that of the slave medium, in order that the original record is not affected by the bias field, and a satisfactory record quality is assured. For example, one may use what is called a metal tape in which powders of ferromagnetic metals such as Fe, Co or Ni or alloys thereof are used as magnetic powders, or what is called an evaporated tape in which the magnetic layer is formed as a continuous film on the base film by plating or vacuum thin film deposition technique.

Examples of the ferromagnetic metal material constituting the magnetic layer of the evaporated tape are Fe, Co, Ni, Co-P alloys, Co-Ni-P alloy, Co-Ni alloys, Co-Pt alloys, Co-Ni-Pt alloys, Fe-Co alloy, Fe-Ni alloys, Fe-Co-Ni alloys, Fe-Co-B alloys and Co-Ni-Fe-B alloys with or without addition of metals such as Cr or Al.

The original recording signal is magnetically recorded in advance with a predetermined recording format, and a mirror image format on the master medium.

The magnetic layer of the slave medium making use of the aforementioned hexagonal ferrite as magnetic powders is superimposed on the magnetic layer of the master medium. The master and slave media are caused to run in pressure contact with each other while a bias magnetic field is applied for transferring data previously recorded on the master medium to the slave medium. The bias magnetic field may be applied by a magnetic gap in the longitudinal direction of the magnetic medium, or mainly in the vertical direction thereof by using, for example, a single pole magnetic head.

From the foregoing it is seen that there is provided a method in which the use of a hexagonal ferrite magnetic recording medium means that transfer can be effected with high efficiency, even if the recording wavelength on the master medium is in the short wavelength range, thus providing transferred data of higher reproducing output and higher quality.

The present invention will now be further described by way of illustrative examples which are not intended to be limiting on the invention.

## Example 1

With the use of the master medium of an evaporated tape having the following magnetic characteristics:

| | |
|---|---|
| coercive force Hc | 135282 A/m (1700 Oe) |
| remanent flux density Br | 0.53T (5300 Gauss) |
| squareness ratio Rs | 0.8 |
| magnetic layer thickness $\delta$ | 0.15 $\mu$m |

and with the use of the slave medium of a magnetic tape making use of Ba ferrite (hexagonal ferrite) as the magnetic powders, and having the following magnetic characteristics:

| | |
|---|---|
| coercive force Hc (perpendicular to tape plane) | 55704 A/m (700 Oe) |
| coercive force Hc (parallel to tape plane) | 55704 A/m (700 Oe) |
| remanent flux density Br | 151197 A/m (1900 Gauss) |
| squareness ratio Rs | 0.6 |
| magnetic layer thickness $\delta$ | 3 $\mu$m |

wherein the magnetic tape of the slave medium is in the non-orientated state also including vertical magnetization components, the contents of the magnetic records on the master medium were magnetically transferred to the slave medium. A magnetic field of 75599 A/m (950 Oe) at the maximum was applied as the bias magnetic field.

For the above magnetic transfer, a magnetic transfer device shown in Figure 1 was used.

Referring to Figure 1, a magnetic head H is held stationary, and a large diameter drive roller 2 is disposed in front of a magnetic gap g such that it is in rolling contact with a non-magnetic cylinder 1. Between the cylinder 1 and the drive roller 2, tapes forming a master medium 3 and a slave medium 4 are caused to travel with their magnetic layers in intimate pressure contact with each other. The rotation of a driving motor 5 is transmitted to the drive roller 2 by way of a pulley 6 and an unindexed belt system. The media 3 and 4 are driven at a constant speed by the drive roller 2 and are stably guided by a plurality of guide rollers 7.

Referring to Figure 2, the magnetic head H comprises a front core unit 11, a rear core unit 12 and a non-magnetic cylinder 13 rotatably provided around the front core unit 11.

The front core unit 11 includes a cylindrical body section 11A provided in the axially intermediate portion thereof and having a cylindrical outer peripheral surface and cylindrical shaft sections 11B and 11C coaxially and integrally extending from the opposite ends of the cylindrical body section 11A. The front core unit 11 comprises a pair of core halves 11a and 11b, which are bonded together along a plane containing the axis of the front core unit 11 and extending across the cylindrical body section 11A and the cylindrical shaft sections 11B and 11C.

Between the core halves 11a and 11b, a non-magnetic material is interposed for forming a magnetic interstice for providing the aforementioned magnetic gap g on the outer periphery of the cylindrical body section 11A, where the magnetic gap g extends along a straight line in the axial direction of the front core unit 11. The magnetic gap g is for producing a bias magnetic field and has a depth larger than a predetermined depth. Magnetic interstices G on both the cylindrical shaft sections 11A and 11B are axially contiguous with and sufficiently larger in width than the magnetic gap g.

The magnetic gap g and the magnetic interstices G are provided by a non-magnetic material, for example forsterrite, copper, bronze or the like, which is interposed for example between the core halves 11a and 11b formed of sintered high density magnetic ferrite and bonded to the core halves 11a and 11b by glass fusion or an epoxy resin abrasive.

Depending on the outer diameter of the cylindrical body section 11A, each of the cylindrical shaft sections 11B and 11C may be in the form of a prism having a cylindrical front side and narrower in transverse width than the cylindrical body section 11A.

The rear core unit 12 comprises a pair of core halves 12a and 12b respectively associated with the core halves 11a and 11b of the front core unit 11. The core halves 12a and 12b of the rear core unit 12 are channel-shaped and tightly connected to each other towards the rear, while being magnetically coupled towards the front with the core halves 11a and 11b at the cylindrical shaft sections 11B and 11C of the front core unit 11, while clamping the core halves 11a and 11b. On the front side of the core halves 12a and 12b of the rear core unit 12, channel-shaped notches $12a_1$ and $12b_1$ are provided for delimiting a predetermined clearance between the cylindrical body section 11A of the front core unit 11 and the rear core unit 12.

A coil 15 is wound on the rear core unit 12. The coil 15 may be wound on each of the core halves 12a and 12b or on only one of the core halves 12a and 12b. As a further alternative, it may be wound between the core halves 12a and 12b. Thus the position of winding of the coil 15 may be freely selected as desired.

On the outer periphery of the cylindrical body section 11A of the front core unit 11, there is provided the non-magnetic cylinder 1 of, for example alumina ceramics, such that it is rotatable about the cylindrical body section 11A.

During constant speed running of the magnetic media 3 and 4, an alternating current of a predetermined frequency f such as, for example 10 kHz, is supplied to the coil 15 of the magnetic head H such that an alternating magnetic flux is generated in the rear core unit 12. In this manner, there is formed a closed magnetic path extending from the core half 12a of the rear core unit 12 through the core half 11a of the front core unit 11, the magnetic gap g and the core half 11b of the front core unit 11 to the core half 12b of the rear core unit 12, such that the alternating magnetic flux concentrated in the magnetic gap g is supplied to the magnetic media 3 and 4.

The magnetic transfer was effected in the manner described above, and the reproduced output voltage of the slave medium was measured for scrutinising the frequency characteristics of the transfer efficiency. The transfer efficiency was found by the formula:

$$(\text{transfer efficiency}) = \frac{(\text{reproduced output voltage of the slave medium})}{(\text{reproduced output voltage from the master medium after transfer})}$$

The results are shown in Figure 3.

Example 2

With the use as the master medium of a metal tape having the following magnetic characteristics:

| | |
|---|---|
| coercive force Hc | 159155 A/m (2000 Oe) |
| remanent flux density Br | 0.26T(2600 Gauss) |
| squareness ratio Rs | 0.8 |
| magnetic layer thickness $\delta$ | 4 $\mu$m |

and with the use as the slave medium of the magnetic tape making use of Ba-ferrite of hexagonal ferrite as magnetic powders, and having the following magnetic characteristics:

| | |
|---|---|
| coercive force (perpendicular to tape plane) | 55704 A/m (700 Oe) |
| coercive force (parallel to tape plane) | 55704 A/m (700 Oe) |
| remanent flux density Br | 0.19T(1900 Gauss) |
| squareness ratio Rs | 0.6 |
| magnetic layer thickness $\delta$ | 3 $\mu$m |

wherein the orientation of the magnetic tape used as the slave medium is nearly omnidirectional, the data on the master medium were transferred to the slave medium in the same manner as in Example 1.

The transfer efficiency of the duplicated slave tape was measured in the same manner as in Example 1. The results are shown in Figure 3.

Comparative Example 1

With the use as the slave medium a magnetic tape having the following magnetic characteristics:

| | |
|---|---|
| coercive force Hc<br>remanent flux density Br<br>squareness ratio Rs<br>magnetic layer thickness δ | 64458 A/m (810 Oe)<br>0.12T(1200 Gauss)<br>0.8<br>3 µm |

and using Co-containing gamma-$Fe_2O_3$ magnetic particles (the orientation being in-plane orientation), the data recorded on the master medium were magnetically transferred onto the slave medium by the method described before in connection with Example 1.

The transfer efficiency of the duplicated slave medium was measured in the same manner as in Example 1. The results are shown in Figure 4.

Comparative Example 2

With a magnetic tape similar to that used in the Comparative Example 1 as the slave medium, the data previously recorded on the n medium were magnetically transferred to the slave medium.

The transfer efficiency of the duplicated slave medium was measured in the same manner as in Example 1. The results are shown in Figure 4.

It is seen from comparison of Figure 3 showing frequency characteristics in the Examples 1 and 2, and Figure 4 showing those in the Comparative Examples 1 and 2 that, in the respective Examples in which hexagonal ferrite for the slave medium, no substantial reduction in the transfer efficiency occurs, even in the short wavelength range, whereas, in the respective Comparative Examples wherein Co-containing gamma-$Fe_2O_3$ is used for the slave medium, a fall in the transfer efficiency occurs especially in the short wavelength range lower than 5 µm. Therefore, in cases wherein digital data with a minimum magnetization inversion width of about 0.67 µm and a maximum magnetization inversion width of about 2.68 µm, for example, are to be transferred, it is difficult to obtain satisfactory magnetic transfer with the method of the Comparative Examples. In contrast thereto, using a method according to the present invention, such digital data can be transferred efficiently and satisfactorily.

The recording wavelength and bias dependency of the transfer output in the transfer methods of Example 1 and Comparative Example 1 were also examined. The results are shown in Figure 5. In this figure, the transfer output of the slave medium is plotted as ordinates and the ratio of the maximum force of the slave medium Hc or Hbias/Hc is plotted as abscissae. Shown at 0 dB on the ordinate is the maximum value of the transfer output of the slave medium.

Referring to Figure 5, a curve A-1 represents the bias dependency of the transfer output in the method of Example 1 for the recording wavelength of O.78 µm, whereas a curve A-2 represents the bias dependency of the transfer output in the method of Example 1 for the recording wavelength of 2.8 µm. It is seen from this figure that, in the method of Example 1, the optimum bias ratio Hbias/Hc for the recording wavelength of 0.78 µm is approximately 1.35 as shown by the arrow mark 1-1, whereas the optimum bias ratio for the recording wavelength of 2.8 µm is approximately 1.4, as shown by the arrow mark a-2. This value is extremely close to the value for the wavelength of 0.78 µm, thus indicating a rather low wavelength dependency of the optimum bias ratio Hbias/Hc.

A curve B-1 represents the bias dependency of the transfer output in the method of the Comparative Example 1 for the recording wavelength of 0.7 µm, whereas a curve B-2 represents that for the recording wavelength of 2.8 µm. In these curves B-1 and B-2, that is in the method of the Example 1, the respective values of the optimum bias ratio Hbias/Hc are greatly different from each other and equal to 0.97 and 1.1 as shown by the arrow marks b-1 and b-2, respectively, thus indicating a rather high wavelength dependency.

**Claims**

**1.** A magnetic transfer method in which a master medium (3) and a slave medium (4) are kept in pressure contact with each other and a bias magnetic field is applied thereacross for transferring previously recorded data on the master medium (3) to the slave medium (4); said master medium (3) being a magnetic recording medium (3) coated with metal magnetic powder or evaporated magnetic metal; characterized in that: a magnetic recording medium (4) coated with magnetic powders of hexagonal ferrite is used as said slave medium (4).

2. A method according to claim 1 wherein said hexagonal ferrite is represented by the general formula:

$MO.n(Fe_2O_3)$

wherein M represents at least one of Ba, Sr and Ca, and n is five or six.

3. A method according to claim 1 wherein said hexagonal ferrite is represented by the general formula:

$BaO.n(Fe_{1-m}X_m)_2O_3$

wherein X represents at least one of Co, Ti, Ni, Mn, Cu, Zn, In, Ge and Nb, m is in the range 0 to 0.2, and n is five or six.

4. A method according to claim 1 wherein said master medium (3) has a coercive force more than twice that of said slave medium.

**Revendications**

1. Procédé de transfert magnétique, dans lequel un support original (3) et un support secondaire (4) sont maintenus en contact de pression l'un avec l'autre et un champ magnétique de polarisation est appliqué à travers eux pour transférer sur le support secondaire (4) les données précédemment enregistrées sur le support original (3) ;
ledit support original (3) étant un support d'enregistrement magnétique (3) revêtu d'une poudre magnétique métallique ou d'un métal magnétique évaporé ;
caractérisé en ce que :
un support d'enregistrement magnétique (4) revêtu de poudres magnétiques de ferrite hexagonal est utilisé au titre dudit support secondaire (4).

2. Procédé selon la revendication 1, où ledit ferrite hexagonal est représenté par la formule générale :

$MO.n(Fe_2O_3)$

où M représente au moins un des éléments Ba, Sr et Ca, et n vaut 5 ou 6.

3. Procédé selon la revendication 1, où ledit ferrite hexagonal est représenté par la formule générale :

$BaO.n(Fe_{1-m}X_m)_2O_3$

où X représente au moins un des éléments Co, Ti, Ni, Mn, Cu, Zn, In, Ge et Nb, m est compris dans l'intervalle de O à 0,2, et n vaut 5 ou 6.

4. Procédé selon la revendication 1, où ledit support original (3) possède un champ coercitif plus de deux fois supérieur à celui dudit support secondaire.

**Patentansprüche**

1. Magnetisches Übertragungsverfahren, bei dem ein Muttermedium (3) und ein Tochtermedium (4) miteinander in Druckkontakt gehalten werden und quer zu diesen Medien ein Vormagnetisierungsfeld angelegt wird, um Daten, die zuvor auf dem Muttermedium (3) aufgezeichnet wurden, auf das Tochtermedium (4) zu übertragen,
wobei das Muttermedium (3) ein mit Magnetmetallpulver oder mit aufgedampftem Magnetmetall beschichtetes magnetisches Aufzeichnungsmedium ist,
dadurch gekennzeichnet,
daß als Tochtermedium (4) ein mit Pulvern aus magnetischem hexagonalem Ferrit beschichtetes magnetisches Aufzeichnungsmedium (4) verwendet wird.

2. Verfahren nach Anspruch 1, bei dem das hexagonale Ferrit der allgemeinen Formel

$MO.n(Fe_2O_3)$

entspricht, worin M wenigstens eines der Elemente Ba, Sr und Ca repräsentiert und n gleich fünf oder sechs ist.

3. Verfahren nach Anspruch 1, bei dem das hexagonale Ferrit der allgemeinen Formel

$BaO.n(Fe_{1-m}X_m)_2O_3$

entspricht, worin X wenigstens eines der Elemente Co, Ti, Ni, Mn, Cu, Zn, In, Ge und Nb repräsentiert, m im Bereich von 0 bis 0,2 liegt und n gleich fünf oder sechs ist.

4. Verfahren nach Anspruch 1, bei dem der Muttermedium (3) eine Koerzitivkraft hat, die mehr als doppelt so groß ist wie die des Tochtermediums.

FIG. 1

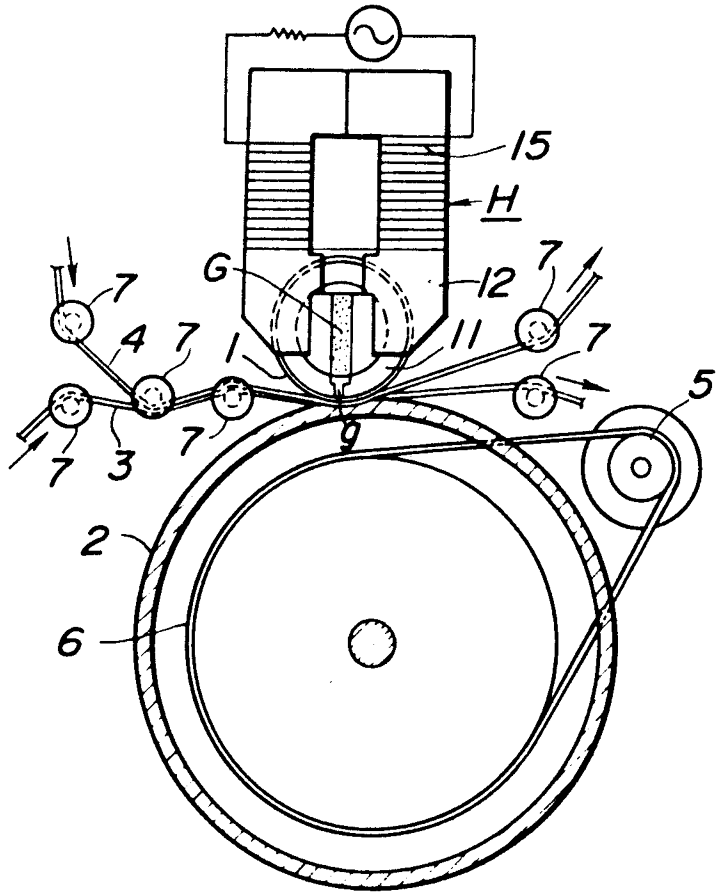
15
H
G
12
7
7
4
7
1
11
7
5
7
3
7
g
2
6

FIG.2

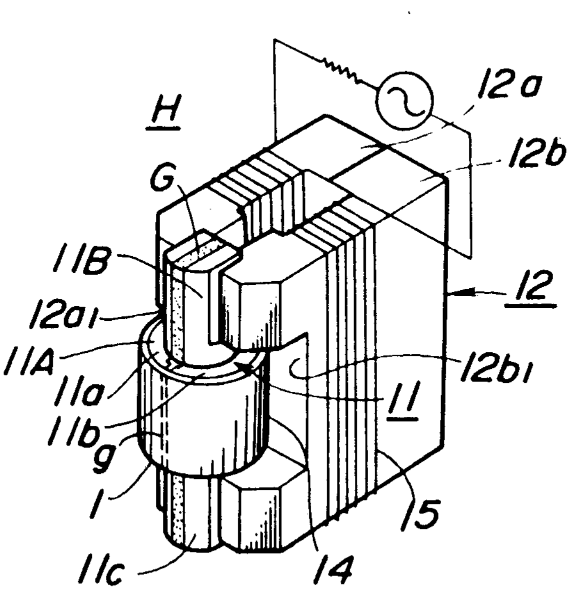
H
12a
12b
G
11B
12a1
12
11A
12b1
11a
11
11b
g
1
15
11c
14

FIG.3

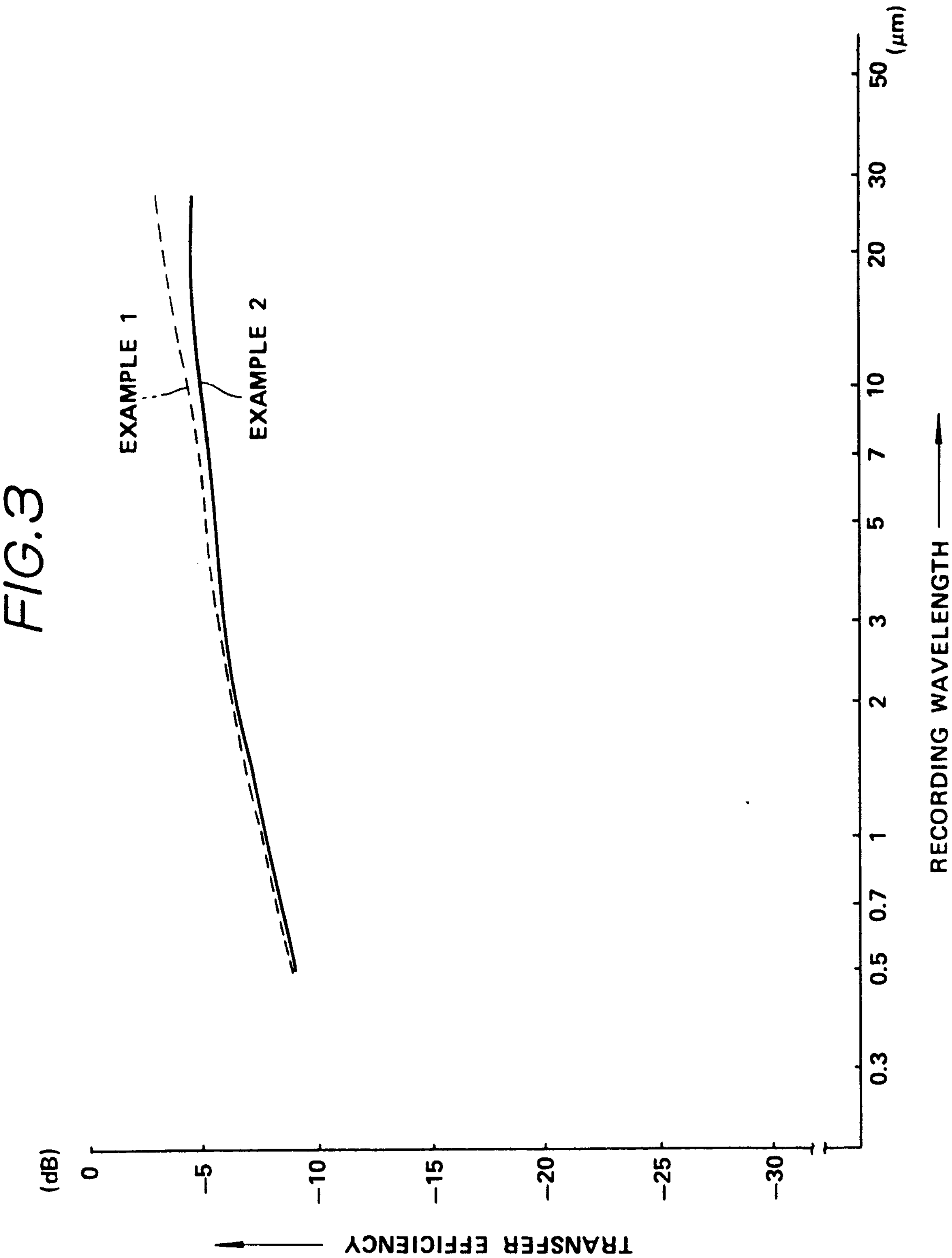

(dB)
0
-5
-10
-15
-20
-25
-30
TRANSFER EFFICIENCY
EXAMPLE 1
EXAMPLE 2
0.3
0.5
0.7
1
2
3
5
7
10
20
30
50
(μm)
RECORDING WAVELENGTH

FIG.4

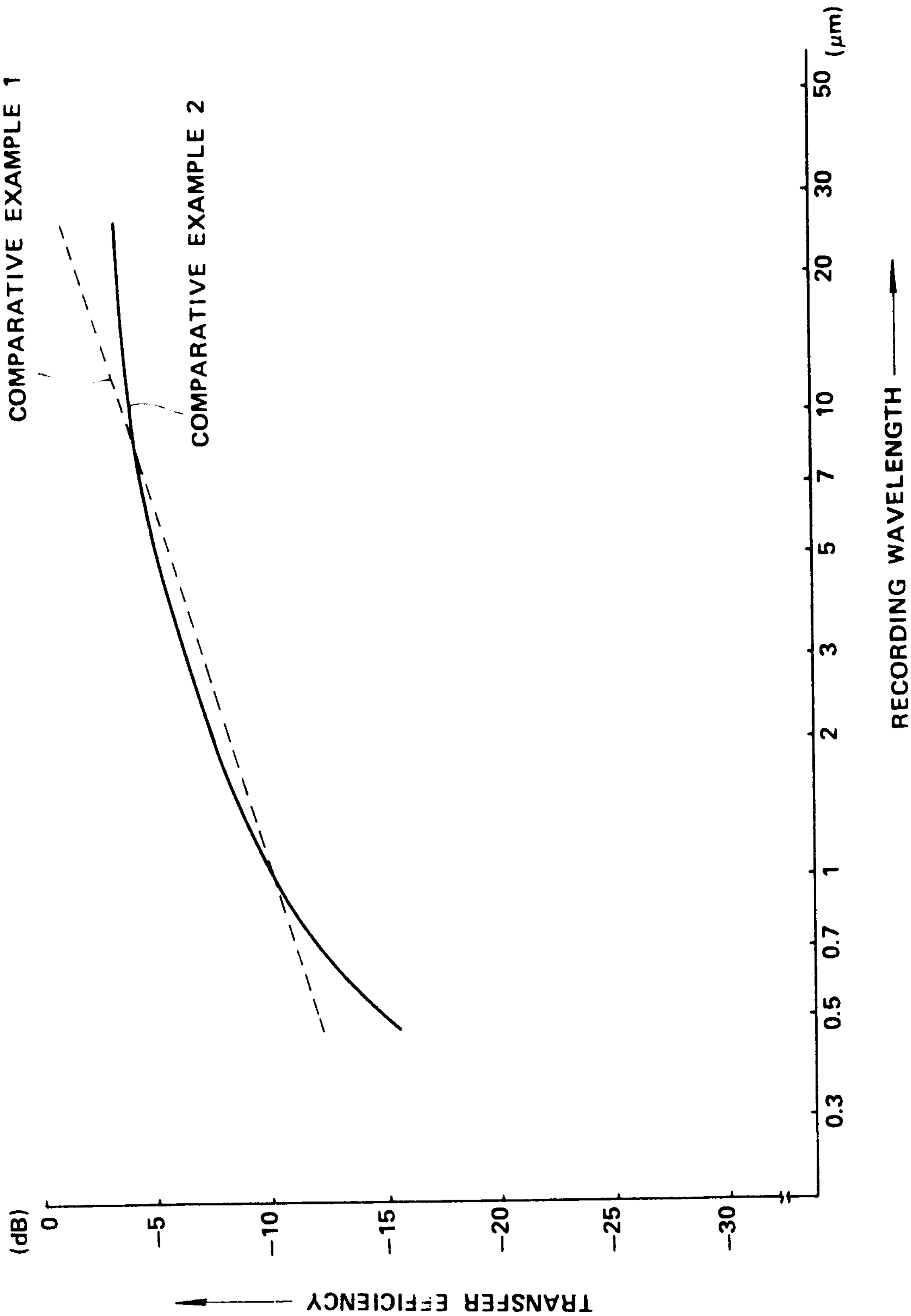
COMPARATIVE EXAMPLE 1
COMPARATIVE EXAMPLE 2
(dB)
0
-5
-10
-15
-20
-25
-30
TRANSFER EFFICIENCY
0.3
0.5
0.7
1
2
3
5
7
10
20
30
50
(μm)
RECORDING WAVELENGTH

FIG.5

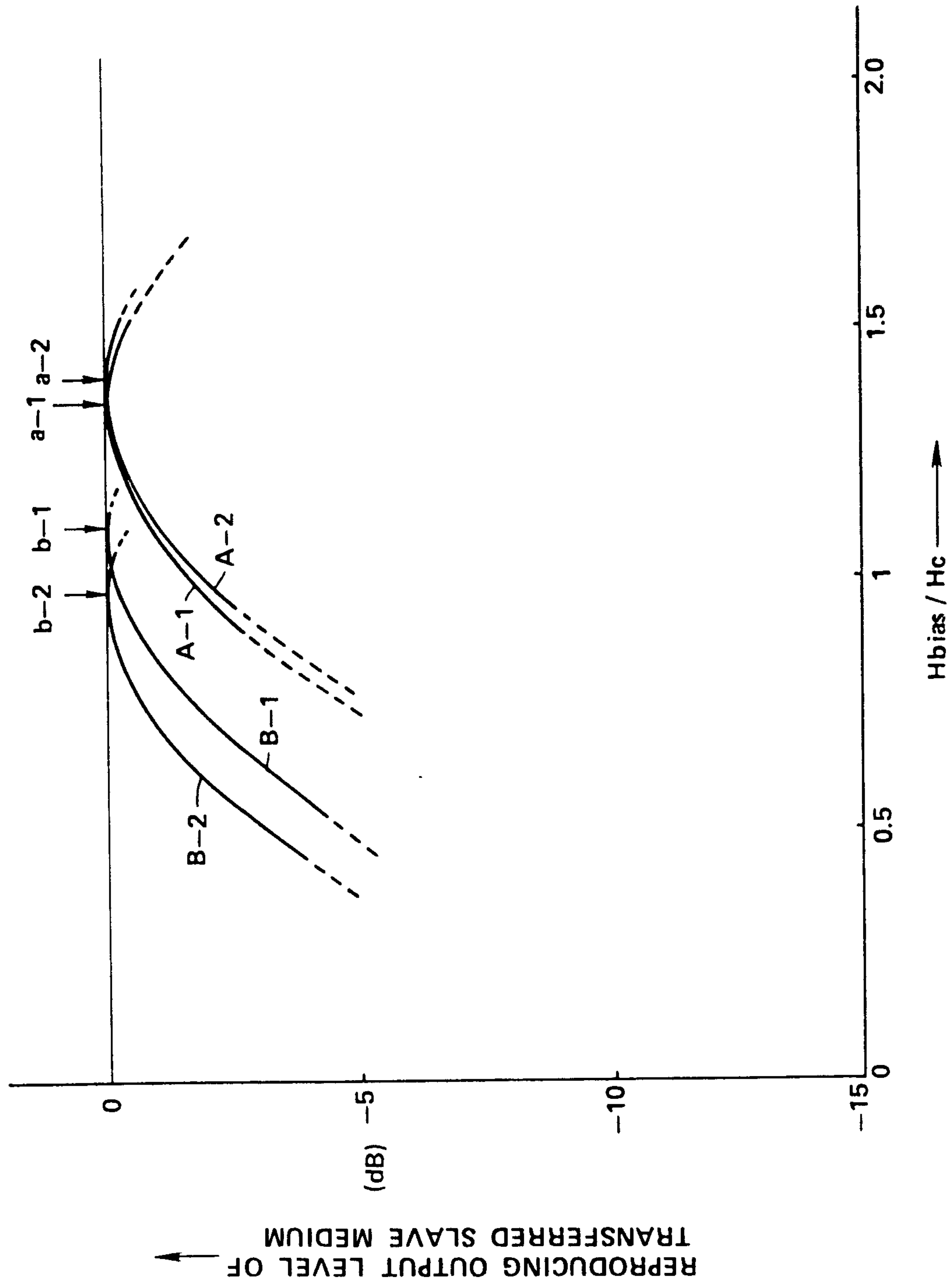
a-1
a-2
b-1
b-2
A-1
A-2
B-1
B-2
0
-5
-10
-15
(dB)
0
0.5
1
1.5
2.0
Hbias / Hc
REPRODUCING OUTPUT LEVEL OF TRANSFERRED SLAVE MEDIUM